# EUROPEAN PATENT APPLICATION

(11) **EP 4 641 258 A1**
(43) Date of publication of application: **29.10.2025**
(21) Application number: 22969526.7
(22) Date of filing: 27.12.2022
(51) Int. Cl.: G01S 17/86, G01S 13/88

(54) **TARGET RECOGNITION METHOD, RELATED APPARATUS AND TERMINAL**

(71) Applicant: Shenzhen Yinwang Intelligent Technologies Co., Ltd., Shenzhen, Guangdong 518110 (CN)
(72) Inventor: CAO, Shaoqian, Shenzhen, Guangdong 518129 (CN); LIU, Zhiyang, Shenzhen, Guangdong 518129 (CN); QIANG, Bo, Shenzhen, Guangdong 518129 (CN)
(74) Representative: Maiwald GmbH
(86) International application number: PCT/CN2022/142376
(87) International publication number: WO 2024/138369

(57) **Abstract**

A target recognition method, a related apparatus, and a terminal are provided, and may be applied to autonomous driving or assisted driving. The method includes: obtaining first data, where the first data includes at least one piece of information about a clustered target that is obtained based on millimeter-wave radar measurement data; and processing the first data based on a scenario classification unit to obtain a scenario classification result of the clustered target, where a target classifier corresponding to each scenario processes the first data in each scenario. Main contribution features of a same target in different scenarios are different. Scenario classification is performed on the first data, so that the main contribution features of the target in the different scenarios can be better recognized, to improve target recognition accuracy.

## Description

### TECHNICAL FIELD

This application relates to the field of autonomous driving technologies, and in particular, to a target recognition method, a related apparatus, and a terminal.

### BACKGROUND

A millimeter-wave radar features a wide frequency band, a short wavelength, a strong penetration capability, and the like. In addition, the millimeter-wave radar has high resolution in velocity measurement and distance measurement and is not easily affected by adverse environments such as night, strong light, cloud, fog, rain, snow, and hail. The millimeter-wave radar has a strong anti-interference capability and can operate all day and in all weather conditions. These features make the millimeter-wave radar crucial for resolving a problem of autonomous driving road target recognition and improving autonomous driving safety.

An autonomous driving road scenario is complex. In a target recognition and classification process based on the millimeter-wave radar, how to more accurately recognize and classify targets is a problem that people always expect to resolve.

### SUMMARY

Embodiments of this application provide a target recognition method, a related apparatus, and a terminal, to obtain a more accurate target recognition result.

According to a first aspect, an embodiment of this application provides a target recognition method. The method includes: obtaining first data, where the first data includes information about a clustered target that is obtained based on millimeter-wave radar measurement data; and the information about the clustered target includes one or more of sparse point cloud data, distance data, azimuth data, Doppler data, and occupancy grid map data (OGM data) of the clustered target; and processing the first data based on at least two scenario classifiers to obtain a scenario classification result of the clustered target. The first data may be single-type data or composite data including the information about the clustered target, for example, single-type data such as the distance data, the azimuth data, the Doppler data, or the occupancy grid map data (OGM data), or may be composite data including, for example, the distance data and the Doppler data, or the distance data and the occupancy grid map data (OGM data), or may be composite data including, for example, the distance data, the azimuth data, and the Doppler data, or the azimuth data, the Doppler data, and the occupancy grid map data (OGM data). A scenario classifier that classifies the first data includes at least two different scenarios. The scenario classifier may process the first data, and output a classification result corresponding to the first data. Main contribution features of a same target in different scenarios are different. Scenario classification is performed on the first data based on different scenario classifiers, so that the main contribution features of the target in the different scenarios can be better recognized, to improve target recognition accuracy.

In a possible implementation of the first aspect, the scenario classification result includes one or more of a radial target scenario, a tangential target scenario, an across target scenario, a straight target scenario, a stopped target scenario, a field of vision boundary target scenario, an occlusion target scenario, a short range target scenario, a medium range target scenario, and a long range target scenario. The scenario classifier includes at least two of the foregoing scenarios, and there may be one or more scenario classification results. The first data may belong to only one of the foregoing scenarios, or may belong to a plurality of the foregoing scenarios. The foregoing scenarios are distinguished and defined based on target features. The scenarios are separately distinguished, and the target is recognized based on the scenarios. In this way, the target can be recognized more accurately in each scenario, and overall target recognition accuracy can be improved.

In a possible implementation of the first aspect, the radial target scenario meets one or more of the following conditions: a radial velocity of a target is greater than or is greater than or equal to a first threshold, a tangential velocity of a target is less than or is less than or equal to a second threshold, or a ratio of a radial velocity of a target to a tangential velocity of the target is greater than or is greater than or equal to a third threshold.

The tangential target scenario meets one or more of the following conditions: the tangential velocity of the target is greater than or is greater than or equal to a fourth threshold, the radial velocity of the target is less than or is less than or equal to a fifth threshold, or a ratio of the tangential velocity of the target to the radial velocity of the target is greater than or is greater than or equal to a sixth threshold.

The across target scenario is a scenario in which an absolute value of a heading angle of the target is greater than or is greater than or equal to a seventh threshold and is less than or is less than or equal to an eighth threshold.

The straight target scenario is a scenario in which the absolute value of the heading angle of the target is greater than or is greater than or equal to a ninth threshold, or the absolute value of the heading angle of the target is less than or is less than or equal to a tenth threshold.

The stopped target scenario meets one or more of the following conditions: a scenario in which the radial velocity of the target is less than or is less than or equal to an eleventh threshold and the tangential velocity of the target is less than or is less than or equal to a twelfth threshold, or a velocity of the target is less than or is less than or equal to a thirteenth threshold.

The field of vision boundary target scenario is a scenario in which a part or all of the target is located in an area outside a field of vision of a millimeter-wave radar.

The occlusion target scenario is a scenario in which there is a second target in the scenario, an angle of the second target relative to the millimeter-wave radar is *α*₂, there is a first target, an angle of the first target relative to the millimeter-wave radar is *α*₁, there is an overlapping angle β between *α*₂ and *α*₁, and β is greater than or is greater than or equal to a fourteenth threshold.

The short range target scenario is a scenario in which a distance between the target and the millimeter-wave radar is less than or is less than or equal to a fifteenth threshold.

The medium range target scenario is a scenario in which the distance between the target and the millimeter-wave radar is greater than or is greater than or equal to a sixteenth threshold and is less than or is less than or equal to a seventeenth threshold.

The long range target scenario is a scenario in which the distance between the target and the millimeter-wave radar is greater than or is greater than or equal to an eighteenth threshold, or a scenario in which a threshold between the target and the millimeter-wave radar is greater than or is greater than or equal to an eighteenth threshold and is less than or is less than or equal to a nineteenth threshold.

Different scenarios are classified and defined, and the first data may be classified into one or more scenarios for recognition. In comparison with direct recognition on the first data in a complex scenario, recognition on the first data in a specific scenario can be more accurate. Recognition accuracy in each scenario is improved, and then the overall recognition accuracy is improved.

In a possible implementation of the first aspect, the method includes: obtaining second data based on the first data, where the second data includes a classification feature parameter of the clustered target, the classification feature parameter includes one or more of a velocity, a circumference, a length, a width, a height, a heading angle, a distance, and an angle of the clustered target, and the classification feature parameter may further include another parameter of the clustered target, which is not limited in this embodiment of this application; and processing the first data based on a scenario classifier and the second data, to obtain a scenario classification result of the clustered target.

The second data is data that is obtained after the first data is processed and that is used to perform scenario classification on the first data. The second data may be single-type data including one of the velocity, the circumference, the length, the width, the height, the heading angle, the distance, and the angle of the target, or may be composite data including a plurality of types of the foregoing data, or may be a composite parameter that is obtained after a plurality of pieces of the foregoing data are calculated and that can be used as a classification basis. The second data obtained by processing the first data has a clearer classification feature parameter, and can support scenario classification on the first data, to obtain the scenario classification result of the clustered target. In this way, recognition on the first data is more accurate.

In a possible implementation of the first aspect, the first data includes a first clustered target; a scenario classification result of the first clustered target includes that the first clustered target belongs to a first scenario; and a first target classifier corresponds to the first scenario, and the first target classifier classifies the first data. After the first data is classified in different scenarios, each scenario has a target classifier corresponding to the scenario to classify the first data. The target classifier may perform optimization and training for the scenario corresponding to the target classifier, so that the classifier is suitable for target classification in the scenario. Different target classifiers can better recognize a main contribution feature of a target in a separate scenario, and therefore a more accurate classification result can be obtained.

Optionally, the first clustered target may alternatively belong to a plurality of scenarios at the same time, for example, belong to both the first scenario and a second scenario. In this case, the first data is separately sent to the first target classifier and a second target classifier, and the two target classifiers separately output classification results. Similarly, the first clustered target may alternatively belong to three or more scenarios, and a method for recognizing the first clustered target is the same as the foregoing method. Details are not described herein again.

In a possible implementation of the first aspect, the first target classifier is a conventional machine learning classifier, a deep learning classifier, or a multi-frame fusion classifier, where the conventional machine learning classifier includes: a Naive Bayes classifier, a logistic regression classifier, a support vector machine classifier (SVM classifier), a random forest classifier (RF classifier), a decision tree classifier, an adaptive boost classifier (AdaBoost classifier), and an extreme gradient boost classifier (XGBoost classifier); the deep learning classifier includes a fully connected neural network classifier, a convolutional neural network classifier, and a deep residual neural network classifier; and the multi-frame fusion classifier includes a multi-frame fusion classifier that performs multi-frame joint processing by using Kalman filtering, hidden Markov, and Naive Bayes technologies based on the conventional machine learning classifier or the deep learning classifier. In different scenarios, types of classifiers may be the same or may be different, to better adapt to scenarios corresponding to the classifiers, and improve recognition accuracy and efficiency.

In a possible implementation of the first aspect, when the scenario classification result of the first clustered target includes that the first clustered target belongs to at least two scenarios, the first clustered target is classified based on a classifier corresponding to the at least two scenarios; and
if a same target has target classification results output in a plurality of classifiers, after a first operation is performed on the plurality of target classification results of the same target, a classification result of the target is determined. When the target is in a plurality of scenarios at the same time, classification results of the target by a plurality of classifiers may be different, and the classification results from the different classifiers are output after calculation, so that accuracy of the classification results can be improved. Optionally, the first operation is performing weighted average on the output results based on reliability of the plurality of target classifiers, and a final obtained result is a final classification result of the target. For another example, a classification result from a target classifier with highest reliability is selected as the final classification result of the target. The accuracy and reliability of the final target recognition result can be improved by comprehensively using the classification results from the plurality of target classifiers.

In a possible implementation of the first aspect, when the scenario classification result of the first clustered target includes that the first clustered target belongs to the at least two scenarios, the first clustered target is classified based on the target classifiers corresponding to the at least two scenarios; and if the same target has a target classification result output only in a single classifier, the classification result from the classifier is a final target classification result. When the target has a result output in only one classifier, the result is output as a final result. This can improve recognition efficiency.

According to a second aspect, an embodiment of this application provides a target recognition apparatus, including an obtaining module and a processing module.

The obtaining module is configured to obtain first data, where the first data includes information about a clustered target that is obtained based on millimeter-wave radar measurement data; and the information about the clustered target includes one or more of sparse point cloud data, distance data, azimuth data, Doppler data, and occupancy grid map data (OGM data) of the clustered target; and the processing module is configured to process the first data to obtain a scenario classification result of the clustered target. The processing module can classify at least two scenarios, or can classify three or more scenarios, but this does not mean that there are definitely two or more classification results of the first data. The processing module has a capability of classifying two or more scenarios, but the first data may belong to one or more scenarios. The first data may be single-type data or multi-dimensional composite data including the information about the clustered target, for example, single-type data such as the distance data or the azimuth data, or may be composite data including, for example, the distance data and the Doppler data, or may be composite data including, for example, the distance data, the azimuth data, and the Doppler data.

In a possible implementation of the second aspect, the scenario classification result includes:
one or more of a radial target scenario, a tangential target scenario, an across target scenario, a straight target scenario, a stopped target scenario, a field of vision boundary target scenario, an occlusion target scenario, a short range target scenario, a medium range target scenario, and a long range target scenario.

In a possible implementation of the second aspect, the radial target scenario meets one or more of the following conditions: a radial velocity of a target is greater than or is greater than or equal to a first threshold, a tangential velocity of a target is less than or is less than or equal to a second threshold, or a ratio of a radial velocity of a target to a tangential velocity of the target is greater than or is greater than or equal to a third threshold.

The tangential target scenario meets one or more of the following conditions: the tangential velocity of the target is greater than or is greater than or equal to a fourth threshold, the radial velocity of the target is less than or is less than or equal to a fifth threshold, or a ratio of the tangential velocity of the target to the radial velocity of the target is greater than or is greater than or equal to a sixth threshold.

The across target scenario is a scenario in which an absolute value of a heading angle of the target is greater than or is greater than or equal to a seventh threshold and is less than or is less than or equal to an eighth threshold.

The straight target scenario is a scenario in which the absolute value of the heading angle of the target is greater than or is greater than or equal to a ninth threshold, or the absolute value of the heading angle of the target is less than or is less than or equal to a tenth threshold.

The stopped target scenario meets one or more of the following conditions: a scenario in which the radial velocity of the target is less than or is less than or equal to an eleventh threshold and the tangential velocity of the target is less than or is less than or equal to a twelfth threshold, or a velocity of the target is less than or is less than or equal to a thirteenth threshold.

The field of vision boundary target scenario is a scenario in which a part or all of the target is located in an area outside a field of vision of a millimeter-wave radar.

The occlusion target scenario is a scenario in which there is a second target in the scenario, an angle of the second target relative to the millimeter-wave radar is *α*₂, there is a first target, an angle of the first target relative to the millimeter-wave radar is *α*₁, there is an overlapping angle β between *α*₂ and *α*₁, and β is greater than or is greater than or equal to a fourteenth threshold.

The short range target scenario is a scenario in which a distance between the target and the millimeter-wave radar is less than or is less than or equal to a fifteenth threshold.

The medium range target scenario is a scenario in which the distance between the target and the millimeter-wave radar is greater than or is greater than or equal to a sixteenth threshold and is less than or is less than or equal to a seventeenth threshold.

The long range target scenario is a scenario in which the distance between the target and the millimeter-wave radar is greater than or is greater than or equal to an eighteenth threshold, or a scenario in which a threshold between the target and the millimeter-wave radar is greater than or is greater than or equal to an eighteenth threshold and is less than or is less than or equal to a nineteenth threshold.

In a possible implementation of the second aspect, second data is obtained based on the first data, where the second data includes a classification feature parameter of the clustered target, and the classification feature parameter includes one or more of a velocity, a circumference, a length, a width, a height, a heading angle, a distance, and an angle of the clustered target, and the classification feature parameter may be another feature parameter of the clustered target, which is not limited in this application. The first data is processed based on the scenario classifier and the second data, to obtain a scenario classification result of the clustered target.

The second data is data that is obtained after the first data is processed and that is used to perform scenario classification on the first data. The second data may be single-type data including one of the velocity, the circumference, the length, the width, the height, the heading angle, the distance, and the angle of the target, or may be composite data including a plurality of types of the foregoing data, or may be a composite parameter that is obtained after a plurality of pieces of the foregoing data are calculated and that can be used as a classification basis.

In a possible implementation of the second aspect, the detection apparatus further includes a first target classifier, where the first data includes a first clustered target, a scenario classification result of the first clustered target includes that the first clustered target belongs to a first scenario, the first target classifier corresponds to the first scenario, and the first target classifier is configured to classify the first data.

Optionally, the first target classifier is a conventional machine learning classifier, a deep learning classifier, or a multi-frame fusion classifier, where the conventional machine learning classifier includes: a Naive Bayes classifier, a logistic regression classifier, a support vector machine classifier (SVM classifier), a random forest classifier (RF classifier), a decision tree classifier, an adaptive boost classifier (AdaBoost classifier), and an extreme gradient boost classifier (XGBoost classifier); the deep learning classifier includes a fully connected neural network classifier, a convolutional neural network classifier, and a deep residual neural network classifier; and the multi-frame fusion classifier includes a multi-frame fusion classifier that performs multi-frame joint processing by using Kalman filtering, hidden Markov, and Naive Bayes technologies based on the conventional machine learning classifier or the deep learning classifier. In different scenarios, types of classifiers may be the same or may be different, to better adapt to scenarios corresponding to the classifiers, and improve recognition accuracy and efficiency.

In a possible implementation of the second aspect, when the scenario classification result of the first clustered target includes that the first clustered target belongs to at least two scenarios, the first clustered target is classified based on target classifiers corresponding to the at least two scenarios; and if a same target has target classification results output in a plurality of target classifiers, after a first operation is performed on the plurality of target classification results of the same target, a target classification result of the target is determined. Optionally, the first operation is performing weighted average on the output results based on reliability of the plurality of target classifiers, and a final obtained result is a final classification result of the target. For another example, a classification result from a target classifier with highest reliability is selected as the final classification result of the target. The accuracy and reliability of the final target recognition result can be improved by comprehensively using the classification results from the plurality of target classifiers.

In a possible implementation of the second aspect, when the scenario classification result of the first clustered target includes that the first clustered target belongs to the at least two scenarios, the first clustered target is classified based on the target classifiers corresponding to the at least two scenarios; and if the same target has a target classification result output only in a single target classifier, the classification result from the target classifier is the final target classification result.

According to a third aspect, this application provides a terminal, where the terminal includes the target recognition apparatus in any one of the possible implementations of the second aspect. Optionally, the terminal is a vehicle, an unmanned aerial vehicle, or a robot.

According to a fourth aspect, this application provides a computer-readable storage medium, where the computer-readable storage medium is configured to store instructions, and when the instructions are executed, the recognition method according to any one of the implementations of the first aspect is implemented.

For implementation effect brought by the implementations corresponding to the second, third, and fourth aspects, refer to the descriptions of the foregoing implementations. Details are not described herein again.

### BRIEF DESCRIPTION OF DRAWINGS

FIG. 1 is a diagram of a data transmission direction of a recognition method according to an embodiment of this application;
FIG. 2 is a diagram of a data processing manner of a classifier according to an embodiment of this application;
FIG. 3 is a diagram of a radial target scenario according to an embodiment of this application;
FIG. 4 is a diagram of a tangential target scenario according to an embodiment of this application;
FIG. 5 is a diagram of an across target scenario according to an embodiment of this application;
FIG. 6 is a diagram of a straight target scenario according to an embodiment of this application;
FIG. 7 is a diagram of a field of vision boundary target scenario according to an embodiment of this application;
FIG. 8 is a diagram of an occlusion target scenario according to an embodiment of this application;
FIG. 9 is a diagram of different range target scenarios according to an embodiment of this application;
FIG. 10 is a schematic flowchart of a target recognition method according to an embodiment of this application;
FIG. 11 is a diagram of a target recognition apparatus according to an embodiment of this application; and
FIG. 12 is a diagram of another target recognition apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

For ease of understanding, some concepts related to embodiments of this application are described below for reference by using examples. Details are as follows.

### 1. Millimeter-wave radar

The millimeter-wave radar is a radar that operates in a millimeter-wave band for detection. Generally, millimeter waves are electromagnetic waves in frequency domain of 20 GHz to 300 GHz (wavelength: 1 mm to 10 mm). The millimeter-wave radar has characteristics of a small size, a light weight, and high spatial resolution, has a strong capability of penetrating smoke, fog, and dust, and can operate all day and in all weather conditions.

### 2. Clustered target

Cluster analysis is performed on data measured by a millimeter-wave radar, to classify the data into data clusters formed by similar objects, and the data cluster is referred to as the clustered target. An object in a cluster is similar to another object in the same cluster, and is different from data in another cluster.

### 3. Point cloud data

The point cloud data is a set of a group of vectors in a multi-dimensional coordinate system. Data measured by a millimeter-wave radar may be different points in the system, and a set of these points forms point cloud data.

### 4. Doppler data

The Doppler effect is as follows: When a vibration source like a sound, light, and a radio wave moves relative to an observer at a relative velocity V, frequency of vibration received by the observer is different from frequency emitted by the vibration source. The Doppler data is data measured by a millimeter-wave radar by using the Doppler effect, and the data can reflect a relative velocity of a detected target and the observer.

### 5. Azimuth data

The Azimuth data is data that reflects a relative azimuth relationship between a target observed by a millimeter-wave radar and the millimeter-wave radar.

### 6. Occupancy grid map

The occupancy grid map (Occupancy Grid Map) is also referred to as occupancy grid mapping. An observation environment of a millimeter-wave radar is divided into grids. Each grid is filled with a binary value, where value 0 indicates that the grid is occupied, and value 1 indicates that the grid is not occupied. Alternatively, each grid stores a probability value, where a larger probability value indicates a higher probability that the grid is dedicated.

### 7. Heading angle

In a ground coordinate system, an included angle between a target center-of-mass velocity and an x axis is the heading angle.

### 8. Processing module

The processing module is a processing unit configured to process and identify first data.

The processing unit may include one or more processors. It should be understood that, in embodiments of this application, for ease of describing a calculation function, the processing module is described as a processor. In a specific implementation process, the processor may include an apparatus having a calculation function. For example, at least one processor may include one or more of the following apparatuses: a central processing unit (central processing unit, CPU), an application processor (application processor, AP), a time-to-digital converter (Time-to-Digital Converter, TDC), a filter, a graphics processing unit (graphics processing unit, GPU), a microprocessor (microprocessor unit, MPU), an application specific integrated circuit (Application Specific Integrated Circuit, ASIC), an image signal processor (image signal processor, ISP), a digital signal processor (digital signal processor, DSP), a field programmable gate array (Field Programmable Gate Array, FPGA), a complex programmable logic device (Complex programmable logic device, CPLD), a coprocessor (assisting a central processing unit to complete corresponding processing and application), a microcontroller unit (Microcontroller Unit, MCU), a neural-network processing unit (neural-network processing unit, NPU), and/or the like.

Optionally, the processing unit may be located inside a target recognition apparatus, or may be located outside a target recognition apparatus.

Alternatively, in some designs, the processing module may include a plurality of components, some components are located inside an apparatus, and some components are located outside an apparatus. For example, the processing module may include a digital-to-analog conversion module, a filtering module, a TOF resolving module, and a point cloud generation module. The digital-to-analog conversion module, the filtering module, and the TOF resolving module are located inside the apparatus, and the point cloud generation module is located outside the apparatus.

### 9. Classifier

A functional unit that performs classification or recognition processing on data may include a processing module, or may be a virtual software algorithm functional unit that has a corresponding processing function in the processing module.

### 10. Classification feature parameter

A velocity, a shape parameter, a length, a width, a height, a circumference, a heading angle, a distance, an angle, or a combination or deformation of the foregoing data that is of a target and that is observed by a millimeter-wave radar, or other data that can be used to distinguish a scenario to which first data belongs. This is not limited in this application, and is collectively referred to as a classification feature parameter.

### 11. Main contribution feature

In a specific scenario, a combination of feature data that provides a main determining basis for target recognition is referred to as a main contribution feature. For example, in a radial target scenario, a velocity of a target is used as a main contribution feature and has a weight of 50%, and a heading angle of the target is used as a main contribution feature and has a weight of 20%; and in a straight target scenario, the velocity of the target is used as a main contribution feature and has a weight of 30%, and the heading angle of the target is used as a main contribution feature and has a weight of 40%. For another example, in a stopped target scenario, a length of a target is used as a main contribution feature and has a weight of 10%; and in an occlusion target scenario, the length of the target is used as a main contribution feature and has a weight of 10%. Compositions of main contribution features and weight proportions of the features in different scenarios may be the same or may be different. This is not limited in this application.

In embodiments of this application, unless otherwise specified, a quantity of nouns represents "singular nouns or plural nouns", namely, "one or more". "At least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. Unless otherwise specified, the character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one item (piece) of a, b, or c may represent: a, b, c, a and b, a and c, b and c, or a, b, and c. Herein, a, b, and c may be singular or plural.

Ordinal numerals such as "first" and "second" in embodiments of this application are used to distinguish between a plurality of objects, and are not intended to limit sizes, content, a sequence, a time sequence, application scenarios, priorities, or importance of the plurality of objects. For example, the first processing module and the second processing module may be a same processing module, or may be different processing modules. In addition, this name does not indicate different structures, locations, priorities, application scenarios, importance degrees, or the like of the two processing modules.

In embodiments of this application, "connection" may be a direct connection or an indirect connection. In addition, "connection" may be an electrical connection or a communication connection. For example, that two electrical elements A and B are connected may mean that A and B are directly connected, or may mean that A and B are indirectly connected through another electrical element or a connection medium, so that an electrical signal can be transmitted between A and B. For another example, that two devices A and B are connected may mean that A and B are directly connected, or may mean that A and B are indirectly connected through another communication device or a communication medium, provided that A and B can communicate with each other.

In embodiments of this application, if there is no special description or logic conflict, terms and/or descriptions in different embodiments are consistent and may be mutually referenced. Technical features in different embodiments may be combined to form a new embodiment based on an internal logical relationship between the technical features.

A person of ordinary skill in the art may understand that all or some of steps of embodiments may be implemented by hardware or a program instructing related hardware. The program may be stored in a computer-readable storage medium. The storage medium may be a read-only memory, a magnetic disk, a compact disc, or the like.

The foregoing describes some concepts in embodiments of this application, and the following describes technical features in embodiments of this application.

A millimeter-wave radar is widely used in the field of autonomous driving. During target recognition by the millimeter-wave radar, a single classifier is widely used to recognize road targets in a complex environment. However, a same target has different main contribution features in different scenarios. If the single classifier is used to resolve this problem, the main contribution features of the target may be compromised in the scenarios, causing recognition performance loss or deterioration.

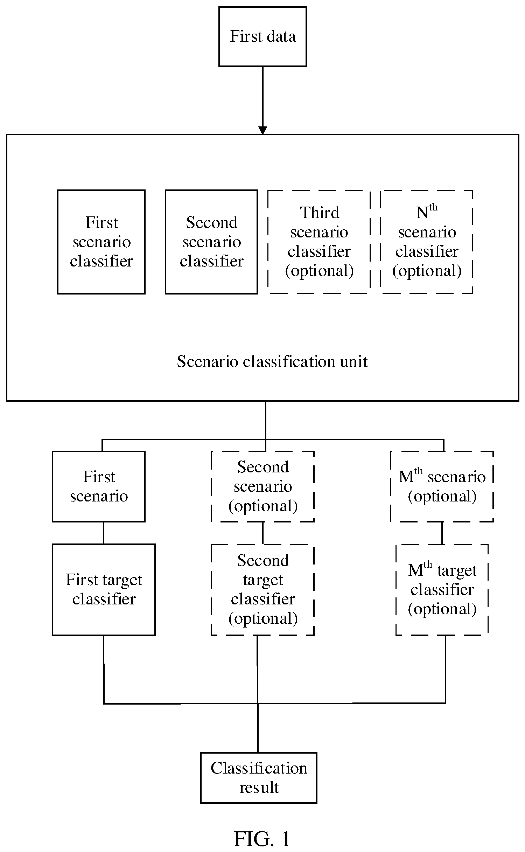

Therefore, this application provides a target recognition method. FIG. 1 is a diagram of a data transmission direction of a recognition method according to this application. The method includes: obtaining first data, where the first data includes information about a clustered target that is obtained based on millimeter-wave radar measurement data; and the information about the clustered target includes one or more of sparse point cloud data, distance data, azimuth data, Doppler data, and occupancy grid map data (OGM data) of the clustered target; and processing the first data based on at least two scenario classifiers to obtain a scenario classification result of the clustered target. The method is performed by a scenario classification unit in FIG. 1. The scenario classification unit may be integrated into hardware or software of a millimeter-wave radar, or may be a hardware or software functional unit that can implement a data processing function in a mobile data center (Mobile Data Center, MDC) or another processing module having the data processing function. The target recognition method is applied to hardware units such as the millimeter-wave radar, the mobile data center (Mobile Data Center, MDC), an advanced driver assistance system (advanced driver assistance system, ADAS) and a vehicle control unit (vehicle control unit, VCU).

Refer to FIG. 1. The first data is classified in the scenario classification unit including at least two scenario classifiers, where a classification result is one or more scenarios; the first data enters a target classifier in a corresponding scenario; and then a classification result is output.

In a possible implementation, the scenario classification result includes one or more of a radial target scenario, a tangential target scenario, an across target scenario, a straight target scenario, a stopped target scenario, a field of vision boundary target scenario, an occlusion target scenario, a short range target scenario, a medium range target scenario, and a long range target scenario. The scenario classifier includes at least two of the foregoing scenarios, and there may be one or more scenario classification results. The first data may belong to only one of the foregoing scenarios, or may belong to a plurality of the foregoing scenarios. The foregoing scenarios are common scenarios during target recognition. The scenarios are separately distinguished, and the target is recognized based on the scenarios. In this way, target recognition accuracy can be improved.

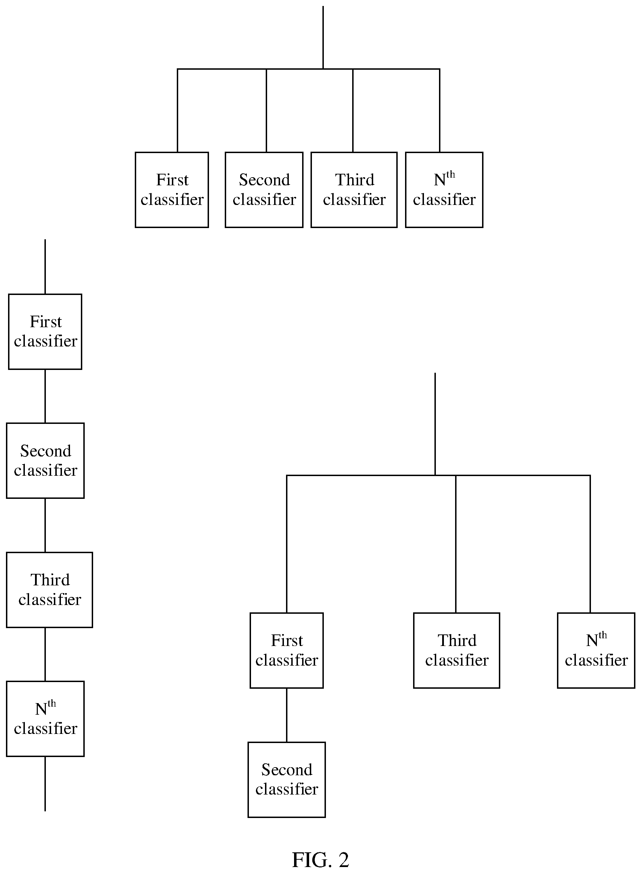

Optionally, a manner in which the data passes through the classifiers may be serial or parallel, or a combination of serial and parallel. As shown in FIG. 2, the classifier may be a scenario classifier or a target classifier.

Specifically, one classifier is configured to determine one classification result of one scenario or target. The following further describes each scenario. It should be noted that, in addition to the following described scenarios, the plurality of classifiers may further include another classifier having a scenario classification function or a target classification function. An upper limit of a quantity of included classifiers is not limited in embodiments of this application. In addition, two or more classifiers in the plurality of classifiers may be combined to form a classifier with more comprehensive functions, or a classifier may be split into a plurality of classifiers with more detailed and specific determining rules. Splitting and combination of the classifiers are not intended to limit the scope of embodiments of this application.

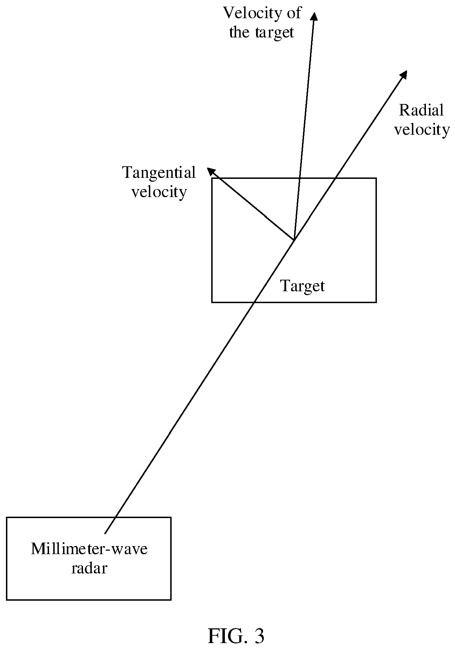

In a possible implementation, FIG. 3 is a diagram of the radial target scenario. The radial target scenario meets one or more of the following conditions: a radial velocity of a target is greater than or is greater than or equal to a first threshold, a tangential velocity of a target is less than or is less than or equal to a second threshold, or a ratio of a radial velocity of a target to a tangential velocity of the target is greater than or is greater than or equal to a third threshold. The radial velocity is a component of a velocity of the target on a straight line on which a connection line of a detector and the target is located, and the tangential velocity is a component of the velocity of the target on a vertical direction of the straight line on which the connection line of the detector and the target is located. According to the working principle of the millimeter-wave radar, measurement on the radial velocity is more accurate than measurement on the tangential velocity. Therefore, the radial target scenario is defined to better utilize a performance advantage of the millimeter-wave radar, and improve recognition accuracy and efficiency.

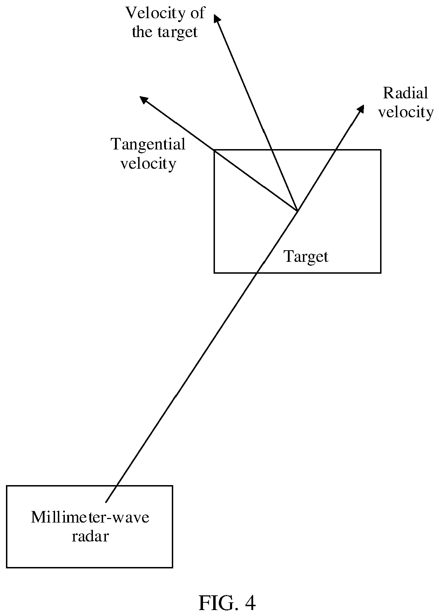

In a possible implementation, FIG. 4 is a diagram of the tangential target scenario. The tangential target scenario meets one or more of the following conditions: the tangential velocity of the target is greater than or is greater than or equal to a fourth threshold, the radial velocity of the target is less than or is less than or equal to a fifth threshold, or a ratio of the tangential velocity of the target to the radial velocity of the target is greater than or is greater than or equal to a sixth threshold.

The radial velocity is the component of the velocity of the target on the straight line on which the connection line of the detector and the target is located, and the tangential velocity is the component of the velocity of the target on the vertical direction of the straight line on which the connection line of the detector and the target is located.

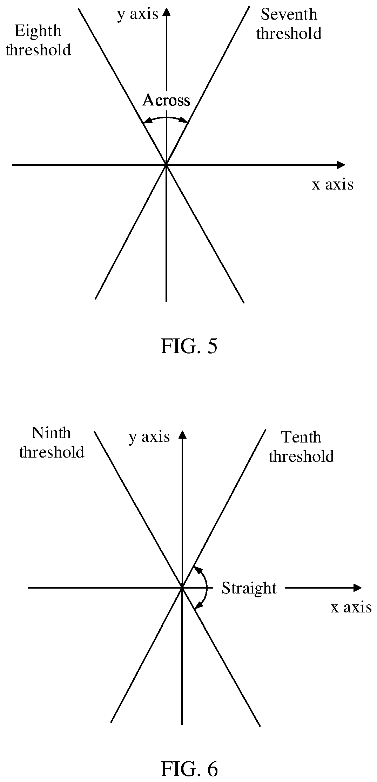

In a possible implementation, FIG. 5 is a diagram of the across target scenario. The across target scenario is a scenario in which an absolute value of a heading angle of the target is greater than or is greater than or equal to a seventh threshold and is less than or is less than or equal to an eighth threshold.

The heading angle is an included angle between a center-of-mass motion direction of the target and an x axis in a ground coordinate system. In this scenario, a motion trend of the target is usually in a vertical direction of the x axis, and a direction of the x-axis is usually set to be a route traveling direction. Therefore, this scenario is referred to as the across target scenario.

In a possible implementation, FIG. 6 is a diagram of the straight target scenario, which is a scenario in which the absolute value of the heading angle of the target is greater than or is greater than or equal to a ninth threshold, or the absolute value of the heading angle of the target is less than or is less than or equal to a tenth threshold. In this scenario, the movement trend of the object is approximately along the x axis direction.

In a possible implementation, the stopped target scenario meets one or more of the following conditions: a scenario in which the radial velocity of the target is less than or is less than or equal to an eleventh threshold and the tangential velocity of the target is less than or is less than or equal to a twelfth threshold, or a velocity of the target is less than or is less than or equal to a thirteenth threshold.

When the velocity of the target is lower than a specified threshold, the target is processed as a stopped target.

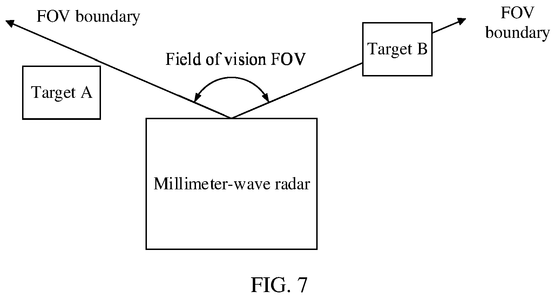

In a possible implementation, FIG. 7 is a diagram of the field of vision boundary target scenario. The field of vision boundary target scenario is a scenario in which a part or all of the target is located in an area outside a field of vision of a millimeter-wave radar.

Because of a characteristic of the millimeter-wave radar, a target outside a field of vision of the millimeter-wave radar deforms, and therefore is different from a target in the field of vision in features. When the target is located in a part or all of the area outside the field of vision of the millimeter-wave radar, an independent scenario and classifier are used to process such target information, to improve accuracy and efficiency of target recognition.

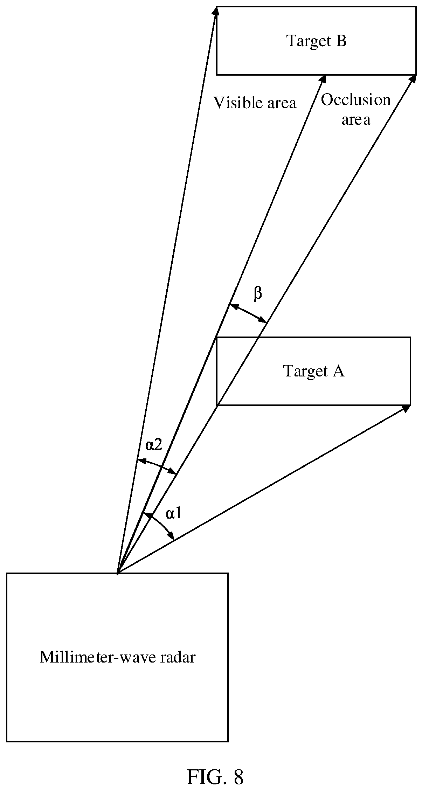

In a possible implementation, FIG. 8 is a diagram of the occlusion target scenario. The occlusion target scenario is a scenario in which there is a second target in the scenario, an angle of the second target relative to the millimeter-wave radar is *α*₂, there is a first target, an angle of the first target relative to the millimeter-wave radar is *α*₁, there is an overlapping angle β between *α*₂ and *α*₁, and β is greater than or is greater than or equal to a fourteenth threshold.

A range corresponding to the angle β is an occlusion area of a target B, and a remaining part is a visible area. After the target is occluded, a feature of the remaining visible part may change. Therefore, the scenario is separately distinguished, to improve accuracy of target recognition in this scenario.

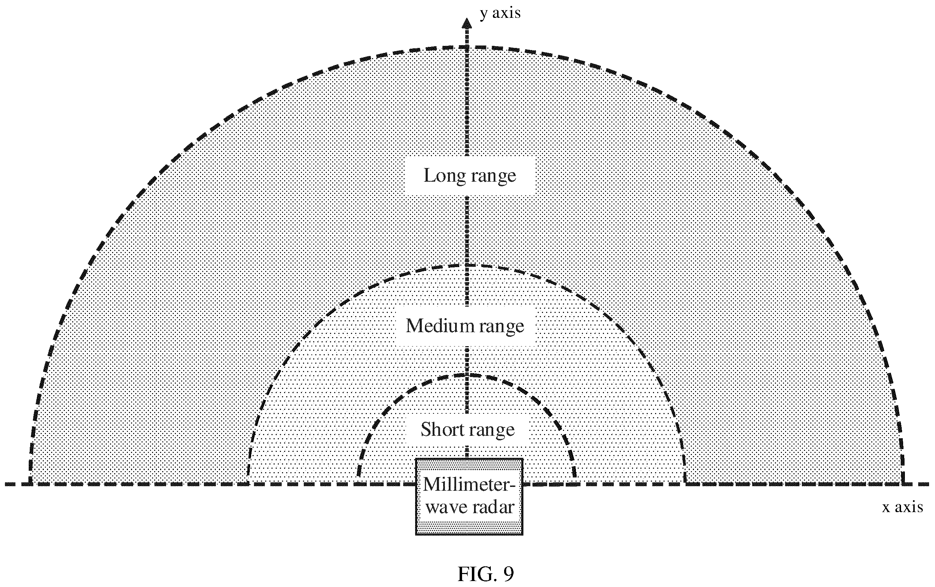

In a possible implementation, FIG. 9 is a diagram of different range target scenarios. Based on a distance between a target and the millimeter-wave radar, there are a short range target scenario (Short Range), a medium range target scenario (Medium Range), and a long range target scenario (Long Range). The short range target scenario (Short Range) is a scenario in which a distance between the target and the millimeter-wave radar is less than or is less than or equal to a fifteenth threshold. The medium range target scenario (Medium Range) is a scenario in which the distance between the target and the millimeter-wave radar is greater than or is greater than or equal to a sixteenth threshold and is less than or is less than or equal to a seventeenth threshold. The long range target scenario (Long Range) is a scenario in which the distance between the target and the millimeter-wave radar is greater than or is greater than or equal to an eighteenth threshold, or a scenario in which a threshold between the target and the millimeter-wave radar is greater than or is greater than or equal to an eighteenth threshold and is less than or is less than or equal to a nineteenth threshold. As shown in FIG. 7, three different scenarios are defined based on distances between the target and the millimeter-wave radar. A feature of an echo and a feature of point cloud generated by the target are different for different distances, and different range target scenarios are distinguished. This helps improve recognition accuracy of targets with different distances.

In a possible implementation, the method includes: obtaining second data based on the first data, where the second data includes a classification feature parameter of the clustered target, and the classification feature parameter includes one or more of a velocity, a circumference, a length, a width, a height, a heading angle, a distance, and an angle of the clustered target; and processing the first data based on a scenario classifier and the second data, to obtain a scenario classification result of the clustered target.

The second data is data that is obtained after the first data is processed and that is used to perform scenario classification on the first data. The second data may be single-type data in data including one of the velocity, the circumference, the length, the width, the height, the heading angle, the distance, and the angle of the target, or may be composite data including a plurality of types of the foregoing data, or may be a composite parameter that is obtained after a plurality of pieces of the foregoing data are calculated and that can be used as a classification basis.

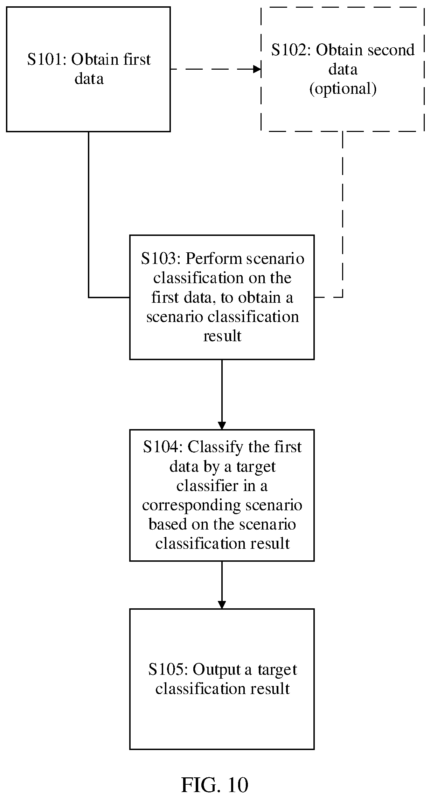

In a possible implementation, the first data includes a first clustered target, and a scenario classification result of the first clustered target includes that the first clustered target belongs to a first scenario; and a first classifier corresponds to the first scenario, and the first classifier classifies the first data. FIG. 10 is a schematic flowchart of a target recognition method according to this application. Step S101: Obtain first data. Optionally, perform Step S102: Obtain second data based on the first data. Step S103: Perform scenario classification on the first data, to obtain a scenario classification result. This step is performed by a scenario classification unit. Step S104: Classify the first data by a target classifier in a corresponding scenario based on the scenario classification result. This step is performed by a target classifier. Finally, Step S105: Output a target classification result. For the scenario classification result obtained in Step S103, refer to the correspondence between the scenario classification result and the target classifier in FIG. 1. After the scenario classification result is obtained, the first data is transmitted to the target classifier in the corresponding scenario for processing. For example, the first target classifier corresponds to the first scenario. When the scenario classification result of the first data includes the first scenario, the first data is processed by the first target classifier.

After scenario classification on the first data is completed, the first data is sent to a classifier corresponding to each scenario for recognition and processing, and the classifier corresponding to each scenario outputs a recognition result in the scenario. Because the classifier corresponding to the scenario processes only target recognition in the scenario, the scenario and the classifier may be trained and adjusted in a targeted manner. In this way, the classifier can have better performance in the scenario. Therefore, target recognition accuracy can be improved.

Optionally, the classifier is a conventional machine learning classifier, a deep learning classifier, or a multi-frame fusion classifier, where the conventional machine learning classifier includes: a Naive Bayes classifier, a logistic regression classifier, a support vector machine classifier (SVM classifier), a random forest classifier (RF classifier), a decision tree classifier, an adaptive boost classifier (AdaBoost classifier), and an extreme gradient boost classifier (XGBoost classifier); the deep learning classifier includes a fully connected neural network classifier, a convolutional neural network classifier, and a deep residual neural network classifier; and the multi-frame fusion classifier includes a multi-frame fusion classifier that performs multi-frame joint processing by using Kalman filtering, hidden Markov, and Naive Bayes technologies based on the conventional machine learning classifier or the deep learning classifier. Classifiers corresponding to different scenarios may be classifiers of a same type, or may be classifiers of different types. This is not limited in this application.

In a possible implementation, when the scenario classification result of the first clustered target includes that the first clustered target belongs to at least two scenarios, the first clustered target is classified based on classifiers corresponding to the at least two scenarios; and if a same target has target classification results output in a plurality of classifiers, after a first operation is performed on the plurality of target classification results of the same target, a classification result of the target is determined; or if a same target has a target classification result output only in a single classifier, the classification result from the classifier is a final target classification result. For example, the target is an occlusion pedestrian in the short range scenario, and the target belongs to both the short range target scenario and the occlusion target scenario. Therefore, target classifiers corresponding to the two scenarios are used to recognize the target. Because the target classifiers have different target recognition capabilities in the scenarios, for example, the target classifier of the occlusion target scenario is more sensitive to a feature of the pedestrian, and the classifier corresponding to the short range target scenario is more sensitive to a vehicle target, only the target classifier corresponding to the occlusion target scenario may output a recognition result of the pedestrian, and the target classifier corresponding to the short range target scenario outputs no recognition result. In this case, the classification result output for the target is the pedestrian. For another example, the target classifier corresponding to the occlusion target scenario outputs a recognition result of the pedestrian, and the target classifier corresponding to the short range target scenario outputs a recognition result of the tree. After a first operation, the classification result output for the target classifier is the pedestrian.

If a same target has target classification results output in a plurality of classifiers, after the first operation is performed on the plurality of target classification results of the same target, a classification result of the target is determined. When the target is in a plurality of scenarios at the same time, classification results of the target by a plurality of classifiers may be different, and the classification results from the different classifiers are output after calculation, so that accuracy of the classification results can be improved. Optionally, the first operation is performing weighted average on the output results based on reliability of the plurality of target classifiers, and a final obtained result is a final classification result of the target. For another example, a classification result from a target classifier with highest reliability is selected as the final classification result of the target. The accuracy and reliability of the final target recognition result can be improved by comprehensively using the classification results from the plurality of target classifiers. When the target has a result output in only one classifier, the result is output as a final result. This can improve recognition efficiency.

According to a result of scenario classification performed on the first data, the first clustered target may belong to two or more scenarios. For example, if the first clustered target belongs to both the radial target scenario and the short range target scenario, classification results of the target are output in the two scenarios. After the two results are processed again, a final classification result of the target is obtained, and recognition on the target is completed. For another example, if the clustered target belongs to the occlusion target scenario and the straight target scenario, but only a classifier corresponding to the straight target scenario outputs a classification result for the target, the classification result is the final recognition result of the target.

In a possible implementation, there may be two or more scenarios. For example, a first scenario corresponds to the short range target scenario and the medium range target scenario, and a second scenario corresponds to the long range target scenario. Optionally, the first scenario corresponds to the short range target scenario, and the second scenario corresponds to the medium range target scenario and the long range target scenario. Optionally, the first scenario corresponds to the radial target scenario, and the second scenario corresponds to the tangential target scenario. Optionally, the first scenario corresponds to the across target scenario, and the second scenario corresponds to the straight target scenario. Optionally, the first scenario corresponds to the stopped target scenario, and the second scenario corresponds to a non-stopped target scenario. Optionally, the first scenario corresponds to the field of vision boundary target scenario, and the second scenario corresponds to a non-field of vision boundary target scenario. Optionally, the first scenario corresponds to the occlusion target scenario, and the second scenario corresponds to a non-occlusion target scenario. There may be another scenario combination, and details are not described herein again.

Optionally, there are three scenarios. For example, a first scenario corresponds to the stopped target scenario, a second scenario corresponds to the radial target scenario other than the stopped target scenario, and a third scenario corresponds to the tangential target scenario other than the stopped target scenario. Optionally, the first scenario corresponds to the stopped target scenario, the second scenario corresponds to the across target scenario other than the stopped target scenario, and the third scenario corresponds to the straight target scenario other than the stopped target scenario. Optionally, the first scenario corresponds to the short range target scenario, the second scenario corresponds to the medium range target scenario, and the third scenario corresponds to the long range target scenario. Optionally, the first scenario corresponds to the field of vision boundary target scenario, the second scenario corresponds to the radial target scenario other than the field of vision boundary target scenario, and the third scenario corresponds to the tangential target scenario other than the field of vision boundary target scenario. Optionally, the first scenario corresponds to the field of vision boundary target scenario, the second scenario corresponds to the across target scenario other than the field of vision boundary target scenario, and the third scenario corresponds to the straight target scenario other than the field of vision boundary target scenario. Optionally, the first scenario corresponds to the occlusion target scenario, the second scenario corresponds to the radial target scenario other than the occlusion target scenario, and the third scenario corresponds to the tangential target scenario other than the occlusion target scenario. Optionally, the first scenario corresponds to the occlusion target scenario, the second scenario corresponds to the across target scenario other than the occlusion target scenario, and the third scenario corresponds to the straight target scenario other than the occlusion target scenario. There may be another scenario combination, and details are not described herein again.

Optionally, the scenario may be further classified into sub-scenarios. For example, the short range scenario, the medium range scenario, and the long range scenario in the stopped target scenario form three scenarios. For another example, the field of vision boundary scenario is classified into the radial target scenario and the tangential target scenario to form two scenarios. For another example, the occlusion target scenario and the non-occlusion target scenario in the radial target form two scenarios. The foregoing scenarios may be combined to form a required scenario classification. For example, a short range scenario, a medium range scenario, and a long range scenario in the stopped target scenario, the radial target scenario, and the tangential target scenario form scenario classification including five scenarios. For another example, the occlusion target scenario and the non-occlusion target scenario in the radial target scenario, the short range scenario, the medium range scenario, the long range scenario in the stopped target scenario, and the straight target scenario form scenario classification including six scenarios. More scenario classification and combination may be performed in the foregoing scenarios based on a target recognition requirement. Details are not described herein. A quantity of scenario classification is not limited in this application.

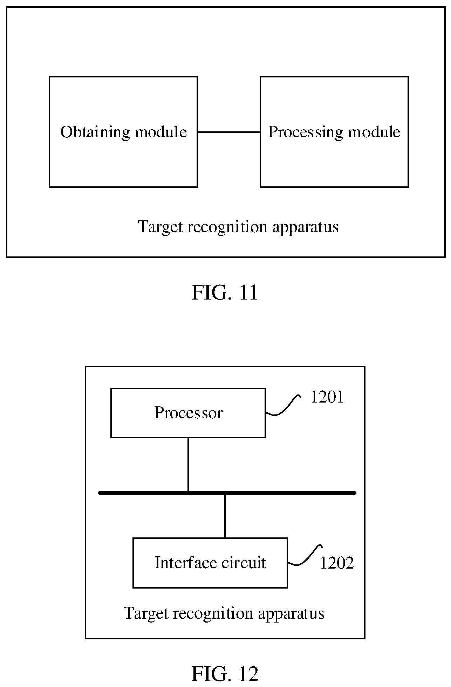

An embodiment of this application provides a target recognition apparatus. FIG. 11 is a diagram of a recognition apparatus according to this application. The apparatus includes an obtaining module and a processing module. The obtaining module is configured to obtain first data. The first data includes information about a clustered target that is obtained based on millimeter-wave radar measurement data. The information about the clustered target includes one or more of sparse point cloud data, distance data, azimuth data, Doppler data, and occupancy grid map data (OGM data) of the clustered target. The processing module is configured to process the first data to obtain a scenario classification result of the clustered target. The processing module can classify at least two scenarios, or can classify three or more scenarios, but this does not mean that there are definitely two or more classification results of the first data. The processing module has a capability of classifying two or more scenarios, but the first data may belong to one or more scenarios. The first data may be single-type data or composite data including the information about the clustered target, for example, single-type data such as the distance data or the azimuth data, or may be composite data including, for example, the distance data and the Doppler data, or may be composite data including, for example, the distance data, the azimuth data, and the Doppler data. Optionally, the target recognition apparatus in this embodiment of this application may be a millimeter-wave radar, or may be a hardware unit, for example, a mobile data center (Mobile Data Center, MDC), an advanced driver assistance system (advanced driver assistance system, ADAS), a vehicle control unit (vehicle control unit, VCU), an electronic control unit (Electronic Control Unit, ECU), or a system on chip (System on Chip, SoC).

An embodiment of this application provides a target recognition apparatus. FIG. 12 is a diagram of a recognition apparatus according to this application. The apparatus includes at least one processor 1201 and an interface circuit 1202. The processor is connected to the interface circuit. The interface circuit is configured to receive data from another apparatus or a signal from the processor and send the data to the another apparatus. The processor implements, by using a logic circuit or executing code instructions, the target recognition method provided in embodiments of this application.

It should be understood that the processor mentioned in embodiments of this application may be implemented by hardware or by software. When the processor is implemented by using the hardware, the processor may be a logic circuit, an integrated circuit, or the like. When the processor is implemented by using the software, the processor may be a general-purpose processor, and is implemented by reading software code stored in a memory.

For example, the processor may be a central processing unit (Central Processing Unit, CPU), or may be another general-purpose processor, a digital signal processor (Digital Signal Processor, DSP), an application-specific integrated circuit (Application Specific Integrated Circuit, ASIC), a field programmable gate array (Field Programmable Gate Array, FPGA), or another programmable logic device, discrete gate or transistor logic device, discrete hardware component, or the like. The general-purpose processor may be a microprocessor, or the processor may be any conventional processor, or the like.

It should be understood that the memory mentioned in embodiments of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be noted that the memory described in this specification aims to include but is not limited to these memories and any memory of another proper type.

In a possible implementation, the scenario classification result includes one or more of a radial target scenario, a tangential target scenario, an across target scenario, a straight target scenario, a stopped target scenario, a field of vision boundary target scenario, an occlusion target scenario, a short range target scenario, a medium range target scenario, and a long range target scenario. The scenario classifier includes at least two of the foregoing scenarios, and there may be one or more scenario classification results. The first data may belong to only one of the foregoing scenarios, or may belong to a plurality of the foregoing scenarios. The foregoing scenarios are common scenarios during target recognition. The scenarios are separately distinguished, and the target is recognized based on the scenarios. In this way, target recognition accuracy can be improved.

In a possible implementation, second data is obtained based on the first data, where the second data includes a classification feature parameter of the clustered target, and the classification feature parameter includes one or more of a velocity, a circumference, a length, a width, a height, a heading angle, a distance, and an angle of the clustered target; and the first data is processed based on the scenario classifier and the second data, to obtain a scenario classification result of the clustered target.

The second data is data that is obtained after the first data is processed and that is used to perform scenario classification on the first data. The second data may be single-type data including one of the velocity, the circumference, the length, the width, the height, the heading angle, the distance, and the angle of the target, or may be composite data including a plurality of types of the foregoing data, or may be a composite parameter that is obtained after a plurality of pieces of the foregoing data are calculated and that can be used as a classification basis.

In a possible implementation, a first target classifier is further included, where the first data includes a first clustered target, a scenario classification result of the first clustered target includes that the first clustered target belongs to a first scenario, the first target classifier corresponds to the first scenario, and the first target classifier is configured to classify the first data.

Optionally, the first target classifier is a conventional machine learning classifier, a deep learning classifier, or a multi-frame fusion classifier, where the conventional machine learning classifier includes: a Naive Bayes classifier, a logistic regression classifier, a support vector machine classifier (SVM classifier), a random forest classifier (RF classifier), a decision tree classifier, an adaptive boost classifier (AdaBoost classifier), and an extreme gradient boost classifier (XGBoost classifier); the deep learning classifier includes a fully connected neural network classifier, a convolutional neural network classifier, and a deep residual neural network classifier; and the multi-frame fusion classifier includes a multi-frame fusion classifier that performs multi-frame joint processing by using Kalman filtering, hidden Markov, and Naive Bayes technologies based on the conventional machine learning classifier or the deep learning classifier. Classifiers corresponding to different scenarios may be classifiers of a same type, or may be classifiers of different types. This is not limited in this application.

This application provides a terminal. The terminal includes the target recognition apparatus included in any one of the foregoing implementations.

Optionally, the terminal is a vehicle, an unmanned aerial vehicle, or a robot.

This application provides a computer-readable storage medium, where the computer-readable storage medium is configured to store instructions, and when the instructions are executed, the method according to any one of the foregoing possible implementations is implemented.

For implementation effect of the detection apparatus, the terminal, and the computer-readable storage medium, refer to descriptions of various implementations. Details are not described herein again.

All or some of the foregoing embodiments may be implemented by using software, hardware, firmware, or any combination thereof. When the software is used to implement the foregoing embodiments, all or some of the foregoing embodiments may be implemented in a form of a computer program product. The computer program product includes one or more computer instructions. When the computer instructions are loaded and executed on a computer, all or some of the procedures or functions according to embodiments of this application are generated. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be stored in the computer, or a data storage device like a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state drive (solid state drive, SSD)), or the like.

A person of ordinary skill in the art may understand that various numerical numbers such as "first" and "second" in this application are merely distinguished for ease of description, and are not intended to limit the scope and sequence of embodiments of this application.

A person of ordinary skill in the art may be aware that units and algorithm steps in the examples described with reference to embodiments disclosed in this specification can be implemented by electronic hardware or a combination of computer software and electronic hardware. Whether the functions are performed in a hardware or software manner depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

## Claims

1. A target recognition method, comprising:
obtaining first data, wherein
the first data comprises information about a clustered target that is obtained based on millimeter-wave radar measurement data; and
the information about the clustered target comprises one or more of sparse point cloud data, distance data, azimuth data, Doppler data, and occupancy grid map data (OGM data) of the clustered target; and
processing the first data based on at least two scenario classifiers to obtain a scenario classification result of the clustered target.

2. The target recognition method according to claim 1, wherein
the scenario classification result comprises one or more of a radial target scenario, a tangential target scenario, an across target scenario, a straight target scenario, a stopped target scenario, a field of vision boundary target scenario, an occlusion target scenario, a short range target scenario, a medium range target scenario, and a long range target scenario.

3. The target recognition method according to claim 2, wherein
the radial target scenario meets one or more of the following conditions: a radial velocity of a target is greater than or is greater than or equal to a first threshold, a tangential velocity of a target is less than or is less than or equal to a second threshold, or a ratio of a radial velocity of a target to a tangential velocity of the target is greater than or is greater than or equal to a third threshold;
the tangential target scenario meets one or more of the following conditions: the tangential velocity of the target is greater than or is greater than or equal to a fourth threshold, the radial velocity of the target is less than or is less than or equal to a fifth threshold, or a ratio of the tangential velocity of the target to the radial velocity of the target is greater than or is greater than or equal to a sixth threshold;
the across target scenario is a scenario in which an absolute value of a heading angle of the target is greater than or is greater than or equal to a seventh threshold and is less than or is less than or equal to an eighth threshold;
the straight target scenario is a scenario in which the absolute value of the heading angle of the target is greater than or is greater than or equal to a ninth threshold, or the absolute value of the heading angle of the target is less than or is less than or equal to a tenth threshold;
the stopped target scenario meets one or more of the following conditions: a scenario in which the radial velocity of the target is less than or is less than or equal to an eleventh threshold and the tangential velocity of the target is less than or is less than or equal to a twelfth threshold, or a velocity of the target is less than or is less than or equal to a thirteenth threshold;
the field of vision boundary target scenario is a scenario in which a part or all of the target is located in an area outside a field of vision of a millimeter-wave radar;
the occlusion target scenario is a scenario in which there is a second target in the scenario, an angle of the second target relative to the millimeter-wave radar is *α*₂, there is a first target, an angle of the first target relative to the millimeter-wave radar is *α*₁, there is an overlapping angle β between *α*₂ and *α*₁, and β is greater than or is greater than or equal to a fourteenth threshold;
the short range target scenario is a scenario in which a distance between the target and the millimeter-wave radar is less than or is less than or equal to a fifteenth threshold;
the medium range target scenario is a scenario in which the distance between the target and the millimeter-wave radar is greater than or is greater than or equal to a sixteenth threshold and is less than or is less than or equal to a seventeenth threshold; and
the long range target scenario is a scenario in which the distance between the target and the millimeter-wave radar is greater than or is greater than or equal to an eighteenth threshold, or a scenario in which a threshold between the target and the millimeter-wave radar is greater than or is greater than or equal to an eighteenth threshold and is less than or is less than or equal to a nineteenth threshold.

4. The target recognition method according to any one of claims 1 to 3, further comprising:
obtaining second data based on the first data, wherein
the second data comprises a classification feature parameter of the clustered target, and the classification feature parameter comprises one or more of a velocity, a circumference, a length, a width, a height, a heading angle, a distance, and an angle of the clustered target; and
processing the first data based on a scenario classifier and the second data, to obtain a scenario classification result of the clustered target.

5. The target recognition method according to any one of claims 1 to 4, wherein
the first data comprises a first clustered target;
a scenario classification result of the first clustered target comprises that the first clustered target belongs to a first scenario; and
target classification is performed on the first data by a first target classifier, wherein the first target classifier corresponds to the first scenario.

6. The target classification and recognition method according to claims 1 to 5, wherein
the first target classifier is a conventional machine learning classifier, a deep learning classifier, or a multi-frame fusion classifier, wherein
the conventional machine learning classifier comprises: a Naive Bayes classifier, a logistic regression classifier, a support vector machine classifier (SVM classifier), a random forest classifier (RF classifier), a decision tree classifier, an adaptive boost classifier (AdaBoost classifier), and an extreme gradient boost classifier (XGBoost classifier);
the deep learning classifier comprises a fully connected neural network classifier, a convolutional neural network classifier, and a deep residual neural network classifier; and
the multi-frame fusion classifier comprises a multi-frame fusion classifier that performs multi-frame joint processing by using Kalman filtering, hidden Markov, and Naive Bayes technologies based on the conventional machine learning classifier or the deep learning classifier.

7. The target recognition method according to any one of claims 1 to 6, further comprising:
when the scenario classification result of the first clustered target comprises that the first clustered target belongs to at least two scenarios, classifying the first clustered target based on target classifiers corresponding to the at least two scenarios; and
if a same target has target classification results output in a plurality of target classifiers, after a first operation is performed on the plurality of target classification results of the same target, determining a target classification result of the target.

8. The target classification and recognition method according to any one of claims 1 to 7, further comprising:
when the scenario classification result of the first clustered target comprises that the first clustered target belongs to the at least two scenarios, classifying the first clustered target based on the target classifiers corresponding to the at least two scenarios; and
if the same target has a target classification result output only in a single target classifier, using the target classification result from the classifier as a final target classification result.

9. A target recognition apparatus, comprising an obtaining module and a processing module, wherein
the obtaining module is configured to obtain first data, wherein the first data comprises information about a clustered target that is obtained based on millimeter-wave radar measurement data; and the information about the clustered target comprises one or more of sparse point cloud data, distance data, azimuth data, Doppler data, and occupancy grid map data (OGM data) of the clustered target; and
the processing module is configured to process the first data to obtain a scenario classification result of the clustered target.

10. The target recognition apparatus according to claim 9, wherein
the scenario classification result comprises:
one or more of a radial target scenario, a tangential target scenario, an across target scenario, a straight target scenario, a stopped target scenario, a field of vision boundary target scenario, an occlusion target scenario, a short range target scenario, a medium range target scenario, and a long range target scenario.

11. The target recognition apparatus according to claim 9 or 10, wherein
the radial target scenario meets one or more of the following conditions: a radial velocity of a target is greater than or is greater than or equal to a first threshold, a tangential velocity of a target is less than or is less than or equal to a second threshold, or a ratio of a radial velocity of a target to a tangential velocity of the target is greater than or is greater than or equal to a third threshold;
the tangential target scenario meets one or more of the following conditions: the tangential velocity of the target is greater than or is greater than or equal to a fourth threshold, the radial velocity of the target is less than or is less than or equal to a fifth threshold, or a ratio of the tangential velocity of the target to the radial velocity of the target is greater than or is greater than or equal to a sixth threshold;
the across target scenario is a scenario in which an absolute value of a heading angle of the target is greater than or is greater than or equal to a seventh threshold and is less than or is less than or equal to an eighth threshold;
the straight target scenario is a scenario in which the absolute value of the heading angle of the target is greater than or is greater than or equal to a ninth threshold, or the absolute value of the heading angle of the target is less than or is less than or equal to a tenth threshold;
the stopped target scenario meets one or more of the following conditions: a scenario in which the radial velocity of the target is less than or is less than or equal to an eleventh threshold and the tangential velocity of the target is less than or is less than or equal to a twelfth threshold, or a velocity of the target is less than or is less than or equal to a thirteenth threshold;
the field of vision boundary target scenario is a scenario in which a part or all of the target is located in an area outside a field of vision of a millimeter-wave radar;
the occlusion target scenario is a scenario in which there is a second target in the scenario, an angle of the second target relative to the millimeter-wave radar is *α*₂, there is a first target, an angle of the first target relative to the millimeter-wave radar is *α*₁, there is an overlapping angle β between *α*₂ and *α*₁, and β is greater than or is greater than or equal to a fourteenth threshold;
the short range target scenario is a scenario in which a distance between the target and the millimeter-wave radar is less than or is less than or equal to a fifteenth threshold;
the medium range target scenario is a scenario in which the distance between the target and the millimeter-wave radar is greater than or is greater than or equal to a sixteenth threshold and is less than or is less than or equal to a seventeenth threshold; and
the long range target scenario is a scenario in which the distance between the target and the millimeter-wave radar is greater than or is greater than or equal to an eighteenth threshold, or a scenario in which a threshold between the target and the millimeter-wave radar is greater than or is greater than or equal to an eighteenth threshold and is less than or is less than or equal to a nineteenth threshold.

12. The target recognition apparatus according to any one of claims 9 to 11, wherein
the first data is further used to obtain second data;
the second data comprises a classification feature parameter of the clustered target, and the classification feature parameter comprises one or more of a velocity, a circumference, a length, a width, a height, a heading angle, a distance, and an angle of the clustered target; and
the processing module is specifically configured to process the first data based on a scenario classifier and the second data, to obtain a scenario classification result of the clustered target.

13. The target recognition apparatus according to any one of claims 9 to 12, further comprising a first target classifier, wherein
the first data comprises a first clustered target;
a scenario classification result of the first clustered target comprises that the first clustered target belongs to a first scenario; and
the first target classifier is configured to perform target classification on the first data, wherein the first classifier corresponds to the first scenario.

14. The target recognition apparatus according to claims 9 to 13, wherein
the first target classifier is a conventional machine learning classifier, a deep learning classifier, or a multi-frame fusion classifier, wherein
the conventional machine learning classifier comprises: a Naive Bayes classifier, a logistic regression classifier, a support vector machine classifier (SVM classifier), a random forest classifier (RF classifier), a decision tree classifier, an adaptive boost classifier (AdaBoost classifier), and an extreme gradient boost classifier (XGBoost classifier);
the deep learning classifier comprises a fully connected neural network classifier, a convolutional neural network classifier, and a deep residual neural network classifier; and
the multi-frame fusion classifier comprises a multi-frame fusion classifier that performs multi-frame joint processing by using Kalman filtering, hidden Markov, and Naive Bayes technologies based on the conventional machine learning classifier or the deep learning classifier.

15. The target recognition apparatus according to any one of claims 9 to 14, wherein
when the scenario classification result of the first clustered target comprises that the first clustered target belongs to at least two scenarios, the first clustered target is classified based on target classifiers corresponding to the at least two scenarios; and
if a same target has target classification results output in a plurality of target classifiers, after a first operation is performed on the plurality of target classification results of the same target, a target classification result of the target is determined.

16. The target recognition apparatus according to any one of claims 9 to 15, wherein
when the scenario classification result of the first clustered target comprises that the first clustered target belongs to the at least two scenarios, the first clustered target is classified based on the target classifiers corresponding to the at least two scenarios; and
if the same target has a target classification result output only in a single target classifier, the target classification result from the classifier is a final target classification result.

17. A terminal, wherein the terminal comprises the target recognition apparatus according to any one of claims 9 to 16.

18. The terminal according to claim 17, wherein the terminal is a vehicle, an unmanned aerial vehicle, or a robot.

19. A computer-readable storage medium, wherein the computer-readable storage medium is configured to store instructions, and when the instructions are executed, the method according to any one of claims 1 to 8 is implemented.
